# EUROPÄISCHE PATENTANMELDUNG

(11) **EP 2 151 399 A2**
(43) Veröffentlichungstag der Anmeldung: **10.02.2010**
(21) Anmeldenummer: 09164494.8
(22) Anmeldetag: 03.07.2009
(51) Int. Cl.: B65G 43/08, B65G 47/88

(54) **Verfahren und Vorrichtung zum Transport von Materialbahnrollen**

(30) Priorität: 05.08.2008 DE 102008041015
(71) Anmelder: Voith Patent GmbH, 89522 Heidenheim (DE)
(72) Erfinder: Rostek, Frank, 40668, Meerbusch (DE); Nelles, Josef, 52224, Stolberg (DE); Marquardt, Sven, 47918, Tönisvorst (DE)

(57) **Zusammenfassung**

Die Erfindung betrifft ein Verfahren und eine Vorrichtung zum Transport von Materialbahnrollen (2.n, 2.n+1) über eine vordefinierte Transportstrecke (s), umfassend über die Transportstrecke (s) zueinander beabstandet angeordnete und Stoppstellen (3, 3.n. 3.n+1) ausbildende Stoppbereiche (4, 4.n, 4.n+1), an welchen die kinetische Energie der einzelnen Materialbahnrolle(2.n, 2.n+1) reduziert wird und die Materialbahnrolle (2.n, 2.n+1) durch einen Kraftstoß (FS) aus dem Stoppbereich (4.n, 4.n+1) ausgeworfen und in Transportrichtung (R) zur nächsten Stoppstelle (4.n, 4.n+1) weitertransportiert wird. Die Erfindung ist **dadurch gekennzeichnet, dass** der Kraftstoß derart gesteuert wird, dass die Bewegung der Materialbahnrolle (2.n, 2.n+1) zwischen zwei in Transportrichtung (R) aufeinander folgenden Stoppbereichen (4.n. 4.n+1) derart erfolgt, dass die Materialbahnrolle (2.n, 2.n+1) bei Eintreten in den in Transportrichtung (R) folgenden Stoppbereich (4.n, 4.n+1) ein vordefiniertes Energieniveau aufweist.

## Beschreibung

Die Erfindung betrifft ein Verfahren zum Transport von Materialbahnrollen über eine vordefinierte Transportstrecke, umfassend über die Transportstrecke zueinander beabstandet angeordnete und Stoppstellen ausbildende Stoppbereiche, an welchen die kinetische Energie der einzelnen Materialbahnrolle reduziert wird und die Materialbahnrolle aus dem Stoppbereich entlassen und in Transportrichtung zur nächsten Stoppstelle weitertransportiert wird.

Die Erfindung betrifft ferner eine Vorrichtung zum Transport von Materialbahnrollen, umfassend über die Strecke zueinander beabstandet angeordnete Stoppbereiche, in denen zumindest über Stelleinrichtungen betätigbare Einrichtungen zum Auffangen oder Freigeben der einzelnen Materialbahnrolle angeordnet sind.

Zwischen Maschinen zur Herstellung von Materialbahnen und nachfolgenden Verarbeitungsanlagen finden häufig Fördersysteme zum Transportieren der Materialbahnrollen Verwendung. Dies gilt insbesondere auch für den Transport zwischen Maschinen zur Herstellung von Materialbahnen und Rollenschneidmaschinen sowie Rollenschneidmaschinen und nachgeordneten Magazinen oder aber Vorrichtungen zum Verpacken derartiger Materialbahnrollen sowie den Transportweg innerhalb der Vorrichtung zur Verpackung von Materialbahnrollen und eines anschließenden Magazins. Derartige Transportsysteme umfassen in der Regel Fördereinrichtungen in Form von Lamellenförderern, Wagenförderern, Rampen oder andere Ausführungen. Da einerseits ein schonender Transport zur Vermeidung von Beschädigungen an den Materialbahnrollen zwingend erforderlich ist und andererseits der Transportweg zum Teil durch Richtungsänderungen und/oder Niveauänderungen charakterisiert ist, sind in Abständen des Transportweges so genannte Stoppstellen bildende Stoppbereiche vorgesehen, die Einrichtungen zum Auffangen und Freigeben der Materialbahnrollen umfassen. Die einzelne Einrichtung kann dabei ein Abbremsen und/oder ein Auswerfen der Materialbahnrolle in Transportrichtung bewirken. Dabei kann die Auffangkraft je nach Ausbildung des Typs der Stoppstellen bildenden Einrichtung am Außenumfang der Materialbahnrolle oberhalb von deren Auflagepunkt an der Transporteinrichtung angeordnet und wirksam werden oder aber bei Integration der Stoppstellen bildenden Einrichtung in den Transportweg über die Änderung der Lage des Stoppbereiches. Insbesondere bei Rollrampen finden derartige Stoppereinrichtungen Verwendung, wobei die einzelne Materialbahnrolle zunächst auf einen ausreichend hohes Niveau angehoben wird, damit sie dem Gefälle folgend abrollen kann. Dabei werden die Rollen in diskreten Abständen an den einzelnen Stoppbereichen gefangen und anschließend im Takt wieder ausgekickt. Maßgeblich für die Geschwindigkeit und damit die Taktzeit ist dabei die Größe der Steigung. Die potenzielle Energie der Höhenlage wird dabei in kinetische Energie umgewandelt, wobei zum Auffangen im Bereich der Stoppstelle diese wiederum in Wärme durch Dämpfung umgewandelt wird, was je nach Größe der Dämpfungswirkung zum Teil auch zu Beschädigungen an der Verpackung der Materialbahnrolle führen kann.

Der Erfindung liegt daher die Aufgabe zugrunde, ein Verfahren und eine Vorrichtung zum schonenden Transport von Materialbahnrollen mit hoher Taktzeit unabhängig von der Ausgestaltung, insbesondere der Topographie des Transportweges bereitzustellen. Die erfindungsgemäße Lösung soll durch einen geringen konstruktiven Aufwand charakterisiert sein.

Die erfindungsgemäße Lösung ist durch die Merkmale der Ansprüche 1 und 11 charakterisiert. Vorteilhafte Ausgestaltungen sind in den Unteransprüchen beschrieben.

Ein erfindungsgemäßes Verfahren zum Transport von Materialbahnrollen über eine vordefinierte Transportstrecke, umfassend über die Transportstrecke zueinander beabstandet angeordnete und Stoppstellen bildende Stoppbereiche, an welchen die kinetische Energie der einzelnen Materialbahnrolle reduziert wird und die Materialbahnrolle aus dem Stoppbereich entlassen und in Transportrichtung zur nächsten Stoppstelle weitertransportiert wird, ist dadurch gekennzeichnet, dass die Materialbahnrolle mittels eines Kraftstoßes aus dem Stoppbereich in Transportrichtung entlassen wird und der Kraftstoß derart gesteuert wird, dass die Bewegung der Materialbahnrolle zwischen zwei in Transportrichtung aufeinander folgenden Stoppbereichen derart erfolgt, dass die Materialbahnrolle bei Eintreten in den in Transportrichtung folgenden Stoppbereich ein vordefiniertes Energieniveau aufweist.

Die erfindungsgemäße Lösung ermöglicht aufgrund der vordefinierten Bewegung zum einen, dass die Handhabung der einzelnen Materialbahnrolle sehr schonend erfolgt, da diese nicht mehr mit undefinierter Kraft an der Auffangeinrichtung auftrifft und zum anderen die tatsächliche Bewegung der Materialbahnrolle im Wesentlichen unabhängig von der Ausbildung der Transportstrecke ist, wodurch insbesondere auch ein Transportieren über Steigungen und Gefälle möglich wird, indem das Ausstoßen oder Auswerfen der Materialbahnrolle mit einem vordefinierten Energieeintrag erfolgt, der auch den Einfluss der Transportstrecke mit berücksichtigt.

Grundsätzlich sind zwei Grundverfahren zur Realisierung des erfindungsgemäßen Verfahrens möglich. Gemäß einer ersten Ausführung wird der Kraftstoß zum Ausstoßen der Materialbahnrolle aus der bisherigen Stoppstelle derart gesteuert, dass die Materialbahnrolle bei Erreichen der in Transportrichtung folgenden Stoppstelle ihre Ruhestellung erreicht. Unter "Ruhestellung" wird der Zustand verstanden, in welchem die Materialbahnrolle im Gleichgewicht ist und nur durch potentielle Energie charakterisiert ist. Die Bewegung der Materialbahnrolle erfolgt dabei derart, dass diese genau im Stoppbereich des in Transportrichtung nächsten Stoppbereiches zum Stillstand gelangt. Dies führt jedoch unter Umständen zu erhöhten Taktzeiten, da die Materialbahnrolle in der Regel auch mit einer geringen Geschwindigkeit ausgeworfen wird, die dann zum Anhalten genau in dem Bereich führt. Um diesen Nachteil auszugleichen, ist es ferner in einer besonders vorteilhaften Ausführung vorgesehen, bei der Berechnung des Bewegungsgesetzes der Materialbahnrolle immer noch ein Energieniveau im folgenden Stoppbereich vorzusehen, das durch eine definierte kinetische Restenergie charakterisiert ist, die dazu führt, dass eine Pendelbewegung im Stoppbereich erforderlich wäre. Diese wird jedoch vorzugsweise über die nachfolgende Ansteuerung der Einrichtung zum Auffangen im folgenden Stoppbereich auf Null reduziert. Dazu wird der Kraftstoß zum Ausstoßen der Materialbahnrolle derart gesteuert, dass die Materialbahnrolle bei Erreichen des in Transportrichtung nächsten Stoppbereiches ein vordefiniertes Energieniveau aufweist, in dessen Abhängigkeit eine Auffangkraft in diesem Stoppbereich gesteuert wird, welche die Materialbahnrolle entsprechend einer vordefinierten Funktion in ihre Ruhestellung verbringt. Die vordefinierte Funktion kann eine Dämpfung durch entsprechende Ausgestaltung der Auffangeinrichtung oder aber die Erzeugung einer Pendelbewegung beinhalten. Ferner kann die der Rolle eigene kinetische Energie durch eine von der Rolle ausgelöste Bewegung der Einrichtung zum Auffangen in potentielle Energie umgewandelt werden.

Durch die geeignete Abstimmung von Kraftstoß und Auffangkraft, insbesondere der einzelnen Bewegungen der diese erzeugenden Einrichtungen in den zwei in Transportrichtung aufeinander folgenden Stoppbereichen wird es daher möglich, eine hinsichtlich der Taktzeit optimierte Bewegung sowie ferner hinsichtlich der Belastung auf die Materialbahnrolle optimierte Bewegung zu ermöglichen.

Das Ausstoßen der Materialbahnrolle erfolgt vorzugsweise mittels einer Einrichtung zum Ausstoßen der Materialbahnrolle und das Auffangen mittels einer Einrichtung zum Auffangen, die beide am Außenumfang der Materialbahnrolle wirksam werden, wobei der über diese zu erzeugende Kraftstoß und/oder die Auffangkraft gesteuert werden. In einer besonders vorteilhaften Ausführung werden die Funktionen des Ausstoßens und des Auffangens von jeweils nur einer, einem Stoppbereich zugeordneten Einrichtung übernommen, die vorzugsweise in Form einer die Gewichtskraft der Materialbahnrolle abstützenden Wippe ausgeführt ist, welche schwenkbar gelagert ist, wobei die Verschwenkbewegung gesteuert wird. Die Funktionskonzentration erlaubt eine einfache und störungsfreie Integration in den Transportweg, ferner kann die Ansteuerung für die einzelnen Funktionen definiert erfolgen, da diese immer unabhängig voneinander ausgeführt werden und sich die Betriebsbereiche nicht überlappen.

Im einfachsten Fall erfolgt die Erzeugung des zum Ausstoßen erforderlichen Kraftstoßes und der zum Auffangen erforderlichen Auffangkraft, die jeweils einander entgegengerichtet sind, durch die Einstellung definierter Bewegungen der Einrichtungen in Form von Schwenkbewegungen um eine Schwenkachse und/oder Bewegungen in horizontaler und/oder vertikaler Richtung bezogen auf die Transportrichtung. Neben der Art der Bewegung sind auch die Geschwindigkeit dieser und die Beschleunigung dieser über den jeweiligen Verstellweg für die Größe des Kraftstoßes beziehungsweise die Wirkung der Auffangkraft maßgebend. Über diese kann bei vorgegebener Wippengeometrie ein Kraftstoß beliebiger Größe eingestellt werden, wodurch unterschiedliche Materialbahnrollen in gleicher Weise, insbesondere mit der gleichen Taktzeit auch bei schwierigen Topographien des Transportweges händelbar sind.

Die Steuerung des Kraftstoßes erfolgt dabei vorzugsweise als Funktion zumindest einer der nachfolgenden Größen:
- wenigstens eine, die Eigenschaften der Materialbahnrolle wenigstens mittelbar beschreibende Größe;
- wenigstens eine, die Eigenschaften des auf die Stoppstelle jeweils folgenden Transportstreckenabschnittes wenigstens mittelbar beschreibende Größe.

Dies gilt in Analogie auch für die Auffangkraft. Die Steuerung erfolgt vorzugsweise als Funktion zumindest einer der nachfolgenden Größen:
- wenigstens eine, die Eigenschaften der Materialbahnrolle wenigstens mittelbar beschreibende Größe;
- wenigstens eine, die Eigenschaften des der Stoppstelle vorgeordneten Transportstreckenabschnittes wenigstens mittelbar beschreibende Größe;
- des auf die Materialbahnrolle im der Stoppstelle vorgeordneten Stoppbereich aufgebrachten Kraftstoßes.

Als die Eigenschaften des Transportstreckenabschnittes wenigstens mittelbar beschreibenden Größe wird wenigstens eine der nachfolgend genannten Größen erfasst/bestimmt: die Topographie, die Oberflächenbeschaffenheit, insbesondere Rauhigkeit und Elastizität.

Gemäß einer besonders vorteilhaften Weiterentwicklung kann bei Ausführung der Einrichtungen zum Auffangen/Ausstoßen als Wippe das Gewicht der Materialbahnrolle beim Einlaufen in den Stoppbereich über diesen erkannt werden, ferner kann gerade zur Steuerung der Auslenkbewegung auch die Position innerhalb des Stoppbereiches bestimmt werden.

In einer besonders vorteilhaften Ausgestaltung kann ferner die Größe der Gewichtskraft an der Wippe bei Lagerung der Materialbahnrolle an dieser aus der Haltekraft der zugehörigen Stelleinrichtung ermittelt werden. Auf zusätzliche Einrichtungen zur Ermittlung dieser kann dann verzichtet werden.

In einer vorteilhaften Weiterentwicklung werden für Materialbahnrollen gleichen Typs in der zur Steuerung verwendeten Steuerung für einen konkreten Transportstreckenabschnitt Steuerprogramme zur Einstellung des Kraftstoßes und/oder der Auffangkraft hinterlegt. Das Erreichen des Energieniveaus am folgenden Stoppbereich wird überwacht und bei Abweichung außerhalb eines vordefinierten Zulässigkeitsbereiches die Stellgrößen für den Kraftstoß im Stoppbereich und/oder der Auffangkraft adaptiv angepasst. Dadurch kann die Bewegung der Materialbahnrolle automatisch optimiert werden.

Die erfindungsgemäße Vorrichtung zum Transport von Materialbahnrollen über eine vordefinierte Transportstrecke, umfassend über die Strecke zueinander beabstandet angeordnete Stoppbereiche, in denen zumindest über Stelleinrichtungen betätigbare Einrichtungen zum Auffangen der einzelnen Materialbahnrolle angeordnet sind, ist dadurch gekennzeichnet, dass in den Stoppbereichen über Stelleinrichtungen betätigbare Einrichtungen zum Ausstoßen der Materialbahnrolle vorgesehen sind und dem einzelnen Stoppbereich eine Steuerung/Regelung zur Ansteuerung der Stelleinrichtungen zur Erzeugung eines definierten Kraftstoßes oder einer definierten Auffangkraft zugeordnet ist.

Die Einrichtungen zum Ausstoßen der Materialbahnrolle werden in einer besonders vorteilhaften Ausführung mit Funktionskonzentration von den Einrichtungen zum Auffangen der Materialbahnrollen gebildet, die über die gleichen Stelleinrichtungen angesteuert werden.

In einer besonders vorteilhaften Ausführung werden die Einrichtungen zum Ausstoßen der Materialbahnrolle und die Einrichtungen zum Auffangen der Materialbahnrolle von einem, einen Teilbereich der Transportstrecke bildenden Funktionselement in Form einer Wippe gebildet, welche um eine senkrecht zur Transportrichtung und parallel zur Materialbahnrolle ausgerichtete Achse verschwenkbar und/oder in horizontaler und/oder vertikaler Richtung verstellbar ist. Die Wippe ist Bestandteil der Transportstrecke und stützt die Materialbahnrolle in Schwerkraftrichtung ab, weshalb diese auch zur Ermittlung der Gewichtskraft genutzt werden kann.

Vorrichtungsmäßig ist dazu der einzelnen Stelleinrichtungen der Stoppbereiche eine Steuerung zugeordnet. Vorzugsweise sind die einzelnen Stoppeinrichtungen hinsichtlich der Steuerung miteinander verknüpft, d.h. es besteht die Möglichkeit, jeder einzelnen Stoppeinrichtung eine eigene Steuereinrichtung zuzuordnen bzw. vorzugsweise allen gemeinsam eine Steuereinrichtung. Die Steuerung/Regelung weist dazu zumindest einen, mit wenigstens einer der nachfolgenden Einrichtungen koppelbaren Eingang auf:
- eine Einrichtung zur Erfassung zumindest einer die Eigenschaften der Materialbahnrolle wenigstens mittelbar beschreibenden Größe,
- eine Einrichtung zur Erfassung zumindest einer die Eigenschaften des Transportabschnittes wenigstens mittelbar beschreibenden Größe;
- eine Einrichtung zur Vorgabe des Soll-Energieniveaus der Materialbahnrolle im folgenden Stoppbereich,
- eine Einrichtung zur wenigstens indirekten Erfassung der Bewegungsenergie der Materialbahnrolle beim Eintritt in den in Transportrichtung folgenden Stoppbereich.

Die Steuerung/Regelung umfasst ferner zumindest einen Stellgrößenbildner zur Bestimmung zumindest einer Stellgröße zur Ansteuerung der Stelleinrichtung zur Erzeugung einer definierten Auffangkraft und/oder einer Stellgröße zur Ansteuerung der Stelleinrichtung zur Erzeugung eines definierten Kraftstoßes. Diese Einrichtungen sind dabei über wenigstens einen Ausgang der Steuerung/Regelung verbunden.

Die erfindungsgemäße Lösung wird nachfolgend anhand von Figuren erläutert. Darin ist im Einzelnen Folgendes dargestellt:
- Figur 1: verdeutlicht in schematisiert vereinfachter Darstellung den Grundaufbau und die Grundfunktion einer erfindungsgemäßen Vorrichtung zum Transport von Materialbahnrollen;
- Figur 2a: verdeutlicht anhand einer Steuerung/Regelung die Steuerung des Kraftstoßes;
- Figur 2b: verdeutlicht anhand einer Steuerung/Regelung die Steuerung der Auffangkraft,
- Figur 3: verdeutlicht in vereinfachter Darstellung anhand eines Signalflussbildes den Grundablauf eines erfindungsgemäßen Verfahrens.

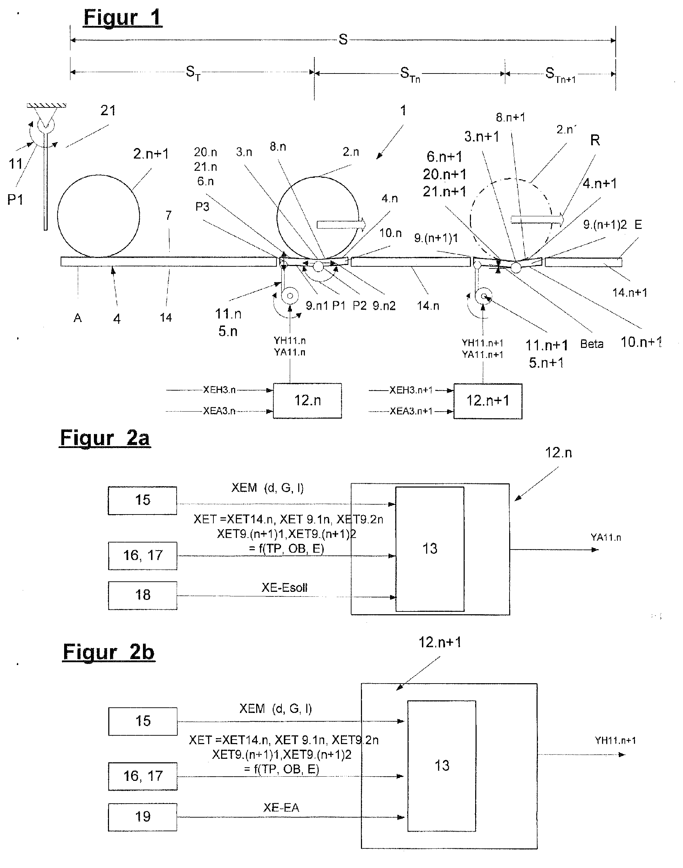

Die Figur 1 verdeutlicht in schematisch stark vereinfachter Darstellung den Grundaufbau und die Grundfunktion einer Vorrichtung 1 zum Transport von Materialbahnrollen 2.n und 2.n+1 über einen Transportweg s. Die durch diesen beschreibbare Transportrichtung ist mit R bezeichnet. Der mittels der Vorrichtung 1 beschreibbare Transportweg s ist dabei durch so genannte Stoppstellen 3.1 bis 3.n bildende Stoppbereiche 4.1 bis 4.n in Transportstreckenabschnitte s_{T}, hier s_{T}, s_{Tn}, s_{Tn+1} mit n ≥ 0 unterteilt. Dargestellt sind hier beispielhaft die Stoppstellen 3, 3.n und 3.n+1 in den Stoppbereichen 4, 4.n und 4.n+1. Die Transporteilabschnitte sind mit s_{T} bis s_{Tn+1} bezeichnet. Dabei erstrecken sich diese jeweils zwischen zwei Stoppstellen 3.n und 3.n+1 beziehungsweise einem von einem Stoppbereich 4 gebildeten Anfangsbereich A des Transportweges s und einer Stoppstelle 3.n und einem Endbereich E des Transportweges s und der diesem vorgeordneten Stoppstelle, hier 3.n+1.

An den Stoppstellen 3.1 bis 3.n bildenden Stoppbereichen 4.1 bis 4.n erfolgt ein Auffangen der auf diese zu bewegten Materialbahnrollen 2, hier beispielhaft 2.n an der Stoppstelle 3.n beziehungsweise beim Weiterrollen dieser in strichpunktierter Darstellung 2.n' in 3.n+1. Die einzelne Materialbahnrolle 2.n gelangt, ausgestoßen im Anfangsbereich, insbesondere am Stoppbereich 4 an der in Transportrichtung R folgenden Stoppstelle 3.n zum Stillstand und wird aus dieser Ruheposition, welche nur durch potentielle Energie Emax=Eₚₒₜ der Materialbahnrolle 2.n charakterisiert ist, durch den erfindungsgemäß gesteuerten definierten Ausstoß der Materialbahnrolle 2.n aus dem Stoppbereich 4.n derart mit kinetischer Energie Eₖᵢₙ beaufschlagt, dass diese mit einem Energieniveau in den nächsten in Transportrichtung R liegenden Stoppbereich 4.n+1 eintritt, das noch ein definiertes Auffangen beziehungsweise Abbremsen auf einen Zustand mit nur potentieller Energie Eₚₒₜ und damit auf eine Geschwindigkeit, insbesondere Vorschubgeschwindigkeit vv und Umfangsgeschwindigkeit vu der Materialbahnrolle 2.n auf Null erlaubt. Der Transport der einzelnen Materialbahnrollen 2.1 bis 2.n erfolgt über die einzelnen Transportstreckenabschnitte s_{T} bis s_{Tn+1} jeweils durch Teilbewegungen, die durch die Bewegung zwischen den einzelnen Stoppstellen 3 bis 3.n+1 definiert sind.

Diese Teilbewegungen werden derart ausgeführt, dass die Materialbahnrolle 2.1 an der jeweils nächsten in Transportrichtung R liegenden Stoppstelle 3.n, 3.n+1 zum Stillstand gelangt.

Grundsätzlich sind zwei Bewegungssteuerungen möglich. Dabei wird zwischen einer Ausstoßbewegung und einer Auffangbewegung unterschieden. In einem ersten Grundansatz wird die Ausstoßbewegung der Materialbahnrolle 2.n aus der Stoppstelle 3.n des Stoppbereiches 4.n derart gezielt gesteuert, insbesondere durch Steuerung des auf diese auszuübenden Kraftstoßes FS, dass diese genau an der nächsten Stoppstelle 3.n+1 in Transportrichtung R frei von einer aktiven Fangbewegung innerhalb des Stoppbereiches 4.n+1 zum Halten gelangt. In einem zweiten Grundansatz werden die Ausstoßbewegungen und die Auffangbewegungen an zwei in Transportrichtung R hintereinander angeordneten Stoppbereichen 4.n und 4.n+1 zur Erzielung einer hohen Durchlaufrate derart aufeinander abgestimmt gesteuert, dass das Auffangen zu einer schonenden Abbremsung der Materialbahnrolle 2.n auf Geschwindigkeit Null an der Stoppstelle 3.n+1 führt. Jede Stoppstelle 3.n ist dabei durch eine Einrichtung 20.n, 20.n+1 zum Auffangen und eine Einrichtung 21.n, 21.n+1 zum Ausstoßen der Materialbahnrolle 2.n in dem jeweiligen Stoppbereich 4.n, 4.n+1 charakterisiert. Dabei können diese Einrichtungen 20.n, 21.n beziehungsweise 20.n+1, 21.n+1 von am Außenumfang der Materialbahnrolle 2.n wirksam werdenden Schwenkarmen gebildet werden, die in eine Auffangposition oder Ausstoßposition verschwenkbar sind, wie beispielsweise für 20, 21 im Bereich 4 in Figur 1 dargestellt oder aber, wie in Figur 1 für die Stoppbereiche 4.n und 4.n+1 schematisiert vereinfacht dargestellt jeweils in einem Funktionselement 6.n, 6.n+1 integriert werden. Dieses Funktionselement 6.n, 6.n+1 ist dabei Bestandteil des Transportweges s und stützt die Materialbahnrolle 2.n in Schwerkraftrichtung ab. Die Funktionselemente 6.n, 6.n+1 sind dabei gegenüber den jeweils benachbarten Transportstreckenabschnittsbereichen s_{Tn} und s_{Tn+1} bewegbar, insbesondere um eine Achse, die quer zur Transportrichtung R ausgerichtet ist, verkippbar. Eine Verschwenkbewegung kann dabei zusätzlich auch mit einer Linearbewegung in horizontaler und/oder vertikaler Richtung gekoppelt werden. Das einzelne Funktionselement 6.n. 6.n+1 ist hier in vorteilhafter Weise als Wippe 10.n, 10.n+1 ausgebildet. Die einzelne Wippe 10.n, 10.n+1 ist über eine Stelleinrichtung 11.n, 11.n+1 in ihrer Bewegung steuerbar. Die Möglichkeiten der Verstellbewegung sind dabei von der Art der Lagerung der einzelnen Wippe 10.n, 10.n+1 und den Freiheitsgraden dieser Lagerung abhängig. Als Bewegung wird vorzugsweise eine Schwenkbewegung um eine senkrecht zur Transporteinrichtung R der Materialbannrolle 2.n ausgerichtete Achse gemäß Doppelpfeil P1 ausgeführt. Diese Schwenkbewegung P1 kann auch durch die Überlagerung von Bewegungen in einem an die Vorrichtung 1 angelegten Koordinatensystem in X- und Z-Richtung erzielt werden, wobei die Bewegungsmöglichkeiten in X-Richtung mit P 2 und in Z-Richtung mit P3 bezeichnet sind. Zusätzlich zu einer Schwenkbewegung P1 kann auch eine Bewegung in X-Richtung P2 erfolgen. Zur Realisierung der genannten Bewegungen wird konstruktiv auf bekannte Einrichtungen zurückgegriffen, insbesondere Schwenklager, in Führungen, insbesondere Linearführungen gleit- und/oder wälzgelagerte Elemente. Die Position der einzelnen Wippe 10.n, 10.n+1 in Y-Richtung, d.h. senkrecht zur Transportrichtung R in der Transportebene XY, ist konstant.

Das die einzelne Wippe 10.n, 10.n+1 bildende Funktionselement 6.n, 6.n+1 ist durch eine vorzugsweise gegenüber der Oberfläche 7 des Transportweges s bzw. der benachbarten Transportstreckenabschnittsbereiche s_{T} bis s_{Tn+1} von der ebenen Ausführung abweichende Oberfläche 8.n, 8.n+1 charakterisiert. Vorzugsweise ist die einzelne Oberfläche 8.n, 8.n+1 im Querschnitt in Transportrichtung R betrachtet gegenüber der Oberfläche 7 des Transportweges s entweder konkav oder aber durch zumindest zwei Teilabschnittsbereiche 9.n1 bis 9.n2, 9.(n+1)1, 9.(n+1)2 beschreibbar, die in einem Winkel β zueinander ausgerichtet sind und gegenüber der Transportrichtung ebenfalls in einem Winkel 90°-β verlaufen, wobei in Transportrichtung R betrachtet der erste Teilabschnitt 9.n1, 9.(n+1)1 durch eine Neigung in einem Winkelbereich von 0° bis 45°, insbesondere 1 ° bis 20°, charakterisiert ist, während der zweite daran anschließende Teilabschnitt 9.n2, 9.(n+1)2 durch eine Steigung von der Stoppstelle 3.n, 3.n+1 bis auf Höhe des Niveaus 7 des Transportweges s in der Größenordnung von 0° bis 45°, insbesondere 1° bis 20°, charakterisiert ist.

Durch die Schwenkbewegung P1 und/oder Überlagerungen von Horizontal- und/oder Vertikalbewegungen P2, P3 kann eine vordefinierte Bewegung der Wippe 10.n, eingestellt werden, über die ein Kraftstoß FS auf die Materialbahnrolle 2.n ausgeübt wird und damit eine Antriebsfunktion übernimmt. Die Antriebsfunktion im Bereich 4 wird über den Schwenkarm realisiert. Die Ansteuerung der einzelnen Einrichtungen 20 und 21 der einzelnen Stoppbereiche wird nachfolgend für die Bereiche 4.n und 4.n+1 erläutert. Es versteht sich von selbst, dass die Aussagen auch auf 4 übertragbar sind.

Zur Realisierung der Bewegung ist der einzelnen Wippe 10.n, 10.n+1 die Stelleinrichtung 11.n, 11.n+1 zugeordnet. Über diese kann neben der Art der Bewegung insbesondere auch die Geschwindigkeit und Beschleunigung der Bewegung gesteuert werden. Die Ansteuerung der Stelleinrichtungen 11 beziehungsweise 11.n erfolgt über eine Steuerung/Regelung 12.n beziehungsweise 12.n+1, die den einzelnen Stoppbereichen 4.n und 4.n+1 jeweils zugeordnet ist und auch von einer Mehrzahl oder allen Stoppbereichen gemeinsamen Steuerung/Regelung gebildet werden kann. Eingangsgrößen einer jeden Steuerung/Regelung 12.n, 12.n+1 sind die jeweils zur Bestimmung der Fangbewegung erforderlichen Eingangsgrößen XEH3.n, XEH3.n+1 und die zur Bestimmung einer definierten Ausstoßbewegung erforderlichen Eingangsgrößen XEA3.n, XEA3.n+1. Aus diesen werden die erforderlichen Stellgrößen zur Ansteuerung des Stoppbereiches 4.n, 4.n+1 zur Realisierung einer definierten Ausstoßbewegung YA11.n, YA11.n+1 sowie zum Auffangen YH11.n und YH11.n+1 gebildet.

Grundsätzlich werden zur Ansteuerung zwei Grundkonzepte unterschieden. Beiden gemeinsam ist, dass die Materialbahnrolle 2.n aus ihrem Gleichgewicht, insbesondere Ruhelage beispielsweise mittels eines Antriebes 5.n, welcher über die Ansteuerung der Wippe 10.n gebildet wird, aus dieser Position herausbewegt und in Richtung zur nächsten Stoppstelle 3.n+1 in Transportrichtung bewegt wird, wobei gemäß einer ersten Ausführung der Kraftstoß FS auf die Materialabahnrolle 2.n derart gesteuert ausgeführt wird, dass eine zusätzliche Abbremsung der Materialbahnrolle 2.n im Stoppbereich 4.n+1 durch eine Fangbewegung des Stoppbereiches 4.n+1 nicht erforderlich ist, wodurch innerhalb des Stoppbereiches 4.n+1 eine Bewegung, insbesondere Pendelbewegung des die Wippe 10.n+1 bildenden und die Materialbahnrolle 2.n abstützenden Funktionselementes 6.n+1 um die Stoppstelle 3.n+1 vermieden werden soll, die zum einen zeitaufwendig und ferner auch zu Beschädigungen an der Umhüllung der Materialbahnrolle 2.n führen kann und daher durch eine definierte Auffangbewegung auszugleichen wäre. Dies wird erfindungsgemäß dadurch gelöst, dass die sich innerhalb einer Stoppstelle, beispielsweise 3.n befindliche Materialbahnrolle 2.n aus dieser aus der Ruhestellung, in welcher die Materialbahnrolle 2.1 lediglich durch potentielle Energie Eₚₒₜ charakterisiert ist, antreibend aus dieser herausbewegt wird und zur nächsten in Transportrichtung liegenden Stoppstelle 3.n+1 bewegt wird, wobei aufgrund des über die Wippe 10.n ausgeübten Kraftstoßes FS als eine Funktion der Lageänderung der Wippe 10.n und der Geschwindigkeit/Beschleunigung der Lageänderung, lediglich so viel kinetische Energie Eₖᵢₙ in die Materialbahnrolle 2.n eingetragen wird, dass diese gerade ausreicht, um eine Rollbewegung der Materialbahnrolle 2.n genau bis zur Stoppstelle 3.n+1 zu ermöglichen. Die erforderliche kinetische Energie E_{kin-erforderlich} wird in Abhängigkeit der Eingangsgrößen zum Ausstoßen XEA3.n ermittelt. Diese ist dabei eine Funktion der die Materialbahnrolle 2.n wenigstens mittelbar beschreibenden Größen XEM sowie der den Transportstreckenabschnitt s_{Tn} wenigstens mittelbar beschreibenden Größen XET, welche die Eingangsgrößen XEA3.n beinhalten. Der einzelne Transportstreckenabschnitt s_{Tn} beziehungsweise s_{Tn+1} setzt sich dabei aus einem Transportwegteilabschnitt 14.n und einem Teilbereich der beidseits an diesen angrenzenden Stoppbereiche 4.n und 4.n+1, hier die Teilbereiche 9.n2 und 9.(n+1)1 zusammen. Wenigstens mittelbar in diesem Zusammenhang bedeutet, dass es sich um die, die Materialbahnrolle 2.n bzw. die Teiltransportstrecke s_{Tn} direkt beschreibenden Größen handeln kann oder aber um Größen, die über Referenzgrößen durch funktionale oder andere Zusammenhänge ermittelbar sind.

Als wesentliche, die Materialbahnrolle 2.n beschreibenden Größen XEM für den erforderlichen Energieeintrag und die Antriebsbewegung werden dabei deren Dimensionierung, insbesondere der Durchmesser d, die Erstreckung in Längsrichtung, d.h. Breite und die Gewichtskraft G, verstanden. Die den Transportstreckenabschnitt s_{Tn} wenigstens mittelbar charakterisierenden Größen XET beschreiben dabei im Wesentlichen die Topographie TP, insbesondere die Länge I des Transportstreckenabschnittes s_{Tn} sowie eine Neigung N oder Steigung S dieses Transportstreckenabschnittes s_{Tn} über die Länge Iₛ des jeweiligen Transportstreckenabschnittes s_{Tn} in Transportrichtung R betrachtet, wobei damit im Wesentlichen die Neigung gegenüber einer horizontalen Ebene gemeint ist, welche in Abhängigkeit zur Ausbildung einer zusätzlich wirkenden Hangabtriebskraft FA oder einer der Bewegung der Materialbahnrolle entgegenwirkenden Kraft FG an der Materialbahnrolle 2.n führt. Wesentliche weitere Größen sind die Oberflächenbeschaffenheit OB, insbesondere Rauhigkeit, die Elastizität, insbesondere E-Modul beziehungsweise die Dämpfungseigenschaften, insbesondere Federkonstante der Oberfläche beschreibenden Größen.

Für die Ausstoßbewegung wesentlich ist ferner, welches Energieniveau die Materialbahnrolle 2.n beim Eintritt als Materialbahnrolle 2n, hier als 2.n' dargestellt, im Stoppbereich 4.n+1 noch aufweisen soll. Diese Größe ist mit XE-Esoll bezeichnet. Das Energieniveau der Materialbahnrolle 2.n am folgenden Stoppbereich 4.n+1 ist dabei wesentlich für die definierte Auffangbewegung an dieser, dessen Istwert wiederum als Eingangsgröße XE-EA für die Steuerung/Regelung der Auffangbewegung fungiert. Dieser kann aus den, die Bewegung und/oder das Energieniveau der Materialbahnrolle 2.n über die Transportstreckenabschnittes s_{Tn} zwischen den beiden Stoppbereichen 4.n und 4.n+1 wenigstens mittelbar beschreibenden Größen charakterisiert werden.

Entsprechend der Eingangsgrößen XE der Steuerung/Regelung 12.1 werden in Abhängigkeit dieser zumindest eine, vorzugsweise eine Mehrzahl von Stellgrößen YA11.n, YH11.n zur Ansteuerung der einzelnen Stelleinrichtungen 11.n der Wippe 10.n gebildet und die Stelleinrichtung 11.n beziehungsweise 11.n+1 angesteuert, woraus sich dann die entsprechende Bewegung ergibt. Insbesondere werden jeweils die Stellgrößen YA11.n der Wippe 10.n zum Erzeugen einer Antriebskraft auf die Materialbahnrolle 2.n in der Stoppstelle 3.n und die Stelleinrichtung 11.n entsprechend angesteuert. Dies erfolgt im Wesentlichen für ein geregeltes Ausstoßen, d.h. einen geregelten Antrieb der Materialbahnrollen 2.n beim Transport zur nachfolgenden in Transportrichtung R liegenden Stoppstelle 3.n+1. Da jedoch zum einen ein zügiger Transport angestrebt wird und ferner beim Auswerfen der Materialbahnrolle aus dem vorgelagerten Stoppbereich 4.n auch weitere Einflussgrößen wirken können, sodass die Materialbahnrolle 2.n nur im Rahmen eines Toleranzbereiches innerhalb bzw. am nächsten Stoppbereich 4.n+1 auch tatsächlich zum Stellstand gelangt, ist gemäß einer besonders vorteilhaften Weiterentwicklung vorgesehen, auch den nachfolgenden Stoppbereich 4.n+1 derart anzusteuern, dass ein definiertes Fangen erfolgen kann, was ebenfalls durch eine Bewegung des Funktionselementes 6.n+1 des jeweiligen Stoppbereiches 4.n+1 realisiert wird. Diese wird ebenfalls über einen Antrieb, vorzugsweise den gleichen Antrieb, der auch die Auswurfbewegung steuert, realisiert.

Die Figuren 2a und 2b verdeutlichen dabei anhand einer schematisiert vereinfachten Darstellung der Steuerung/Regelung 12.n die Funktionsweise des erfindungsgemäßen Verfahrens. Die Steuerung/Regelung 12.n beinhaltet in der Regel ein Steuergerät oder aber bei dezentraler Ausführung virtuell miteinander gekoppelte Einzelkomponenten, die drahtlos oder über Verbindungsleitungen miteinander gekoppelt sein können.

Figur 2a verdeutlicht dabei die zur Ermittlung des Bewegungsablaufes beim Auswurf aus der Stoppstelle 3.n erforderlichen zu berücksichtigenden Eingangsgrößen XE. Diese umfassen die Materialbahnrolle 2.n beschreibende Größen XEM sowie ferner die den nachfolgenden Transportstreckenabschnitt s_{Tn+1} wenigstens mittelbar charakterisierenden Größen XET. Die den Transportstreckenabschnitt s_{Tn} wenigstens mittelbar beschreibende Größen XET beinhalten den Transportwegteilabschnitt 14.n, den Teilabschnitt 9.n2 der Wippe 10.n sowie 9.(n+1)1 des folgenden Stoppbereiches 4.n+1 wenigstens mittelbar charakterisierende Größen XET14.n, XET9.n2, XET9.(n+1)1. Die diese Abschnitte wenigstens mittelbar charakterisierenden Größen beinhalten die Topographie beschreibende Größen TP und die Oberfläche OB beschreibende Größen, ferner das Elastizitätsverhalten an der auffangenden Stoppstelle 3.n+1 sowie auch der auswerfenden Stoppstelle 3.n. Die Bestimmung der Stellgrößen YA11.n zur Erzeugung des erforderlichen Kraftstoßes FS erfolgt ferner in Abhängigkeit einer Sollwertvorgabe XE-Esoll für die Bewegung der Materialbahnrolle im folgenden Stoppbereich 4.n+1. Au s den vorgenannten Größen werden in einer Auswerteinrichtung 13 die erforderlichen Stellgrößen YA11.n für die Ansteuerung im Stoppbereich 4.n ausgegeben, an welchem der Auswurf erfolgt. Denkbar ist auch bei Verwendung einer gemeinsamen Steuerung/Regelung die Auffangbewegung an der Wippe 10.n+1 durch Vorgabe einer Stellgröße YH11.n+1 für die in Transportrichtung R folgende Stoppstelle 3.n+1 zu steuern, sodass eine Ruhestellung der Materialbahnrolle 2.1 in ihrer Mittelstellung in 3.n+1 erreicht wird.

Die Auswertung in der Auswerteinrichtung 13 kann dabei über vordefinierte Algorithmen, Modelle, Programme etc. erfolgen.

Figur 2a verdeutlicht in schematisiert vereinfachter Darstellung die Eingangsgrößen XE zur Steuerung einer definierten Ausstoßbewegung unter Erreichung von XE-Esoll im in Transportrichtung R folgenden Stoppbereich 4.n+1. Dabei kann auf eine Ansteuerung der Einrichtung 20.n+1 zum Auffangen, insbesondere der Auffangbewegung verzichtet werden, wenn die Materialbahnrolle 2.n derart bewegt wird, dass diese allein im auf 4.n nächstfolgenden Stoppbereich 4.n+1 zum Halten kommt. Die Figur 2b verdeutlicht demgegenüber beispielhaft die Steuerung 12.n+1 zur Ansteuerung der Einrichtung 20.n+1 zum Auffangen der mit der Einrichtung 21.n zum Ausstoßen bewegten Materialbahnrolle 2.n aus dem Stoppbereich 4.n. Zur Steuerung einer definierten Auffangbewegung sind auch hier die Materialbahnrolle 2.n beschreibende Größen XEM sowie ferner die den vorangegangen Transportstreckenabschnitt s_{Tn+1} wenigstens mittelbar charakterisierenden Größen XET erforderlich. Die den Transportstreckenabschnitt s_{Tn+1} wenigstens mittelbar beschreibende Größen XET beinhalten den Transportwegteilabschnitt 14.n, den Teilabschnitt 9.2n der Wippe 10.n sowie 9.(n+1)1 des Auffangbereiches 4.n+1 wenigstens mittelbar charakterisierende Größen XET14.n, XET9.n2, XET9.(n+1)1. Die diese Abschnitte wenigstens mittelbar charakterisierenden Größen beinhalten die Topographie beschreibende Größen TP und die Oberfläche OB beschreibende Größen, ferner das Elastizitätsverhalten an der auffangenden Stoppstelle 3.n+1 sowie auch der auswerfenden Stoppstelle 3.n. Die Bestimmung der Stellgrößen YH11.n+1 zur Erzeugung einer definierten Auffangbewegung in Abhängigkeit des am vorangegangenen Transportstreckenabschnitt erfolgten Energieeintrages XE-EA.

Die Ermittlung der Eingangsgrößen XE erfolgt in der Regel über Einrichtungen zur Erfassung dieser, beispielhaft sind hier Einrichtungen 15 für die Erfassung der Eigenschaften der Materialbahnrolle 2.n, Einrichtungen 16 zur Erfassung der Topographie TP in den einzelnen Abschnittsbereichen des Transportstreckenabschnittes s_{Tn} und Einrichtungen 17 zur Erfassung der Oberflächenbeschaffenheit wenigsten mittelbar beschreibenden Größen vorgesehen. Die Sollwertvorgabe für eine Soll-Energieniveau XE-Esoll kann für jede Materialbahnrolle 2.n einzeln oder aber für eine Mehrzahl von Materialbahnrollen 2.n, insbesondere Materialbahnrollen gleichen Typs gemeinsam oder aber für alle gemeinsam erfolgen. Die Vorgabe kann manuelle über eine Einrichtung 18 erfolgen, jedoch auch fest definiert in der Steuerung/Regelung 12.n, 12.n+1 hinterlegt sein. Die Vorgabe einer, die Bewegungsenergie der Materialbahnrolle 2.n wenigstens mittelbar beschreibenden Größe beim Eintritt oder vor dem Eintritt in den auffangenden Stoppbereich 4.n+1 kann über Einrichtungen 19 zur Erfassung dieser und/oder die den Kraftstoß FS am vorhergehenden Stoppbereich 4.n wenigstens mittelbar beschreibenden Größen unter Berücksichtigung des Einflusses des Transportweges s erfolgen. Die den Kraftstoß definierenden Größen können auch der Steuerung/Regelung 12.n entnommen werden, über die die Ansteuerung der Stelleinrichtungen 11.n, 11.n+1 erfolgt. Die Kopplung der Einrichtungen 15 bis 19 kann drahtlos oder über Leitungsverbindungen mit der Steuerung/Regelung 12.n, 12.n+1 erfolgen. Dies gilt in Analogie auch für die Kopplung der Steuerung/Regelung 12.n, 12.n+1 mit den jeweiligen Stelleinrichtungen 11.n und 11.n+1 an den Stoppbereichen 4.n und 4.n+1. Die Datenübertragung erfolgt seriell oder aber analog.

Eine Ansteuerung der Einrichtung 21.n zum Ausstoßen der Materialbahnrolle 2.n erfolgt vorzugsweise nur dann, wenn der Stoppbereich 4.n belegt ist. Aufgrund der Belegung werden die Einrichtungen 15 bis 19 aktiviert und ermitteln den erforderlichen Bewegungsablauf von Seiten der Materialbahnrolle 2.n.

Insbesondere kann das aktuelle Gewicht der Materialbahnrollen zwischen Rollen gleichen Typs untereinander bedingt durch unterschiedliche Umschlingungen variieren, weshalb das aktuelle Gewicht vorzugsweise bei Eintritt in den Stoppbereich 4.n ermittelt wird. Dazu kann an der jeweiligen Wippe 10.n eine entsprechende Einrichtung vorgesehen werden. Die Daten bezüglich der üblichen Geometrie, insbesondere Durchmesser, können aus vorgeschalteten Prozessanlagen übergeben werden. Gemäß einer besonders vorteilhaften Ausführung werden diese jedoch noch einmal aktuell ermittelt. Ferner können für jeden Stoppbereich 4.n, 4.n+1 und jede Bewegungsrichtung, insbesondere Transportrichtung R der Materialbahnrolle 2.1 für die sich in Transportrichtung R anschließenden Transportwege Daten, insbesondere die Topographie TP hinterlegt werden. Dies gilt insbesondere, wenn die Topographie TP nicht durch einen ebenen Flächenverlauf charakterisiert ist, sondern durch Steigungen oder Gefälle, wie beispielsweise beim Abrollen einer Materialbahnrolle 2.n an einer geneigten Ebene, die zusätzlich zum Einfluss der Hangabtriebskraft führt, welche eine Beschleunigungskomponente auslöst, die beim Antrieb der Materialbahnrolle 2.n dann nicht mehr berücksichtigt werden muss. Im anderen Fall, insbesondere bei Vorliegen einer Steigung, ist die durch die Hangabtriebskraft bedingte Gegenkraft beim Aufbringen der Antriebskraft mit zu berücksichtigen. Dabei werden für jeden Transportstreckenabschnitt nach einem Stoppbereich beziehungsweise zwischen einzelnen Stoppstellen in Transportrichtung aufeinander folgender Stoppbereiche die Bewegungsgesetze separat ermittelt, in welche die genannten Größen unbekannterweise einfließen können. Da diese im Wesentlichen abhängig sind von, wie bereits ausgeführt, Topographie sowie den erforderlichen Antriebsgrößen, wird hier im Einzelnen nicht mehr auf den Algorithmus eingegangen. Dieser kann entsprechend dem auch zum Auffangen an der in Transportrichtung folgenden Stoppstelle erforderlichen Bewegungsablauf und den dort aufzubringenden Dämpfungseffekt frei eingestellt werden.

Gemäß einer besonders vorteilhaften Ausführung kann die Steuerung auch als adaptive Steuerung ausgeführt sein, das heißt, dabei können die Bewegungsgesetze, die vorzugsweise theoretisch ermittelt werden und berechnet werden und die in der Praxis unter Realbedingungen für die einzelnen Rollentypen angepasst werden können. Dabei spielen im Wesentlichen auch die Oberflächenrauhigkeiten und die Beschaffenheiten über den Transportweg sowie andere Einflüsse eine Rolle.

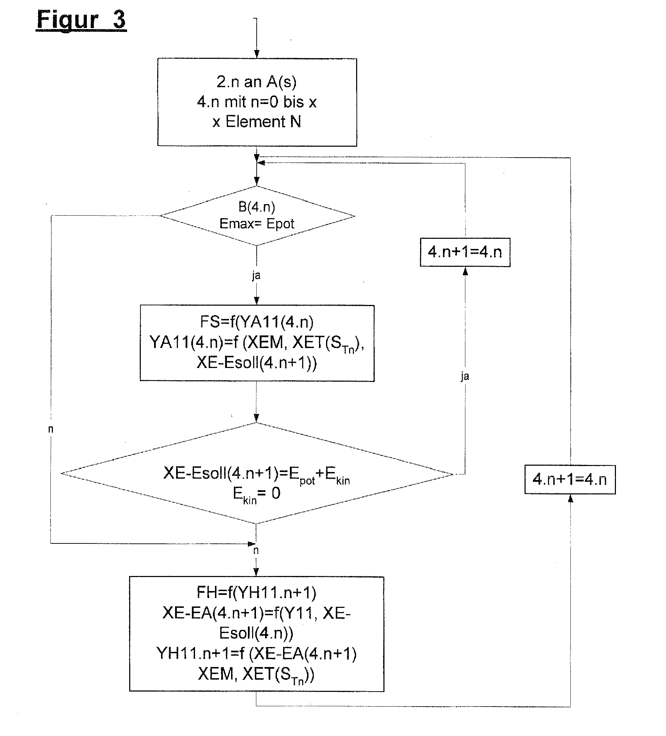

Die Figur 3 verdeutlicht anhand eines Signalflussbildes die einzelnen Verfahrensschritte zur Ansteuerung der einzelnen Stoppbereiche 4.n bis 4.n+1, insbesondere eines am Anfang eines Transportstreckenabschnittes s_{Tn} liegenden ersten Stoppbereiches 4.n und eines in Transportrichtung folgenden Stoppbereiches 4.n+1. Befindet sich dabei die Materialbahnrolle 2.n an der im Stoppbereich 4.n liegenden Stoppstelle 3.n in ihrer Mittellage, d.h. Ruhestellung, in welcher die maximale Energie Emax der Materialbahnrolle 2.n in Form von potentieller Energie Eₚₒₜ vorliegt, wird diese durch eine definierte Antriebsbewegung aus dieser ausgelenkt. Der erforderliche Kraftstoß FS ist als Funktion der die Materialbahnrolle 2.n wenigstens mittelbar charakterisierenden Größen XEM, die den folgenden Transportstreckenabschnitt s_{Tn} wenigstens mittelbar charakterisierenden Größen XET(s_{Tn}) und ein Soll-Energieniveau XE-Esoll (4.n+1) der Materialbahnrolle 2.n am in Transportrichtung R folgenden Stoppbereich 4.n+1 beschreibbar. Aus diesen Größen wird, wie bereits ausgeführt, die Stellgröße YA11 (4.n) zur Realisierung der erforderlichen Antriebsbewegung der Materialbahnrolle 2.n in Form einer Ausstoßbewegung durch Kraftstoß FS erzeugt. Die Materialbahnrolle 2.n wird dann aus dem Stoppbereich 4.n ausgestoßen, rollt in Richtung des in Transportrichtung folgenden Stoppbereiches 4.n+1, wobei bei einem Soll-Energieniveau XE-Esoll (4.n+1) der Materialbahnrolle 2.n am in Transportrichtung R folgenden Stoppbereich 4.n+1 diese automatisch im Stoppbereich 4.n+1 zum Stillstand gelangt. In diesem Fall wird die Position überwacht, der folgende Stoppbereich 4.n+1 wird zum neuen Anfangsstoppbereich 4.n, von dem ein Ausstoßen erfolgt. War das Soll-Energieniveau XE-Esoll (4.n+1) der Materialbahnrolle 2.n am in Transportrichtung R folgenden Stoppbereich 4.n+1 ungleich Null gesetzt worden, erfolgt in Abhängigkeit dessen sowie der Eigenschaften der Materialbahnrolle XEM und des vorgeordneten Transportbereiches XET die Erzeugung einer Auffangkraft FH, die durch die Stellgröße YH11.n+1 einstellbar ist. Die Einstellung von YH11.n+1 erfolgt in Abhängigkeit des tatsächlichen Energieniveaus der Materialbahnrolle, welches wesentlich durch den Energieeintrag XE-EA aufgrund des Kraftstoßes FS im Stoppbereich 4.n erzeugt wurde, und ferner durch die die Materialbahnrolle 2.n wenigstens mittelbar charakterisierenden Größen XEM und die den vorgeordneten Transportstreckenabschnitt s_{Tn} wenigstens mittelbar beschreibenden Größen XET(s_{Tn}). Wurde die Auffangkraft FH erzeugt, wird auch hier das Energieniveau überwacht und gegebenenfalls diese nachgestellt. Der Stoppbereich 4.n+1 wird dann wieder zum ersten Stoppbereich 4.n.

Die erfindungsgemäße Lösung ist nicht auf Ausführungen mit ebener Transportstrecke beschränkt. Sie kann auch für Steigungen eingesetzt werden. Dabei erfolgt in Abhängigkeit des Vorliegens einer Steigung/Neigung eine Erhöhung oder Verringerung des Kraftstoßes oder der Auffangkraft.

Über den Transport der Materialbahnrollen in die vorstehend beschriebene Anlage bzw. aus dieser Anlage heraus sind keine näheren Angaben gemacht worden. Nur ergänzend sei angemerkt, dass der Antransport der Materialbahnrollen in der Regel geführt erfolgt.

### Bezugszeichenliste

- 1: Vorrichtung zum Transport
- 2.n, 2.n+1: Materialbahnrolle
- 3.n, 3.n+1: Stoppstellen
- 4n, 4.n+1: Stoppbereich
- 5: Antrieb
- 6n, 6.n+1: Funktionselement
- 7: Oberfläche
- 8.n, 8.n+1: Oberfläche der Wippe
- 9.n1, 9.n2: Teilabschnitt
- 9.(n+1)1, 9.(n+1)2: Teilabschnitt
- 10.n, 10.n+1: Wippe
- 11.n, 11.n+1: Stelleinrichtung
- 12.n, 12.n+1: Steuerung/Regelung
- 13: Auswerteinrichtung
- 14, 14.n, 14.n+1: Transportwegteilabschnitt
- 15: Erfassungseinrichtung
- 16: Erfassungseinrichtung
- 17: Erfassungseinrichtung
- 18: Erfassungseinrichtung
- 19: Erfassungseinrichtung
- 20, 20.n, 20.n+1: Einrichtung zum Auffangen einer Materialbahnrolle
- 21, 21.n, 21.n+1: Einrichtung zum Ausstoßen einer Materialbahnrolle
- I: Länge der Materialbahnrolle
- d: Durchmesser der Materialbahnrolle
- G: Gewicht der Materialbahnrolle
- Iₛ: Länge des Transportweges
- s: Transportweg, Transportstrecke
- Eₚₒₜ: potentielle Energie
- Eₖᵢₙ: kinetische Energie
- Emax: maximale Energie
- FH: Auffangkraft
- FS: Kraftstoß
- S_{T}, S_{Tn}, S_{Tn+1}: Transportstreckenabschnitte
- YH11.n, YH11.n+1: Stellgrößen für die Stelleinrichtung zum Auffangen einer Materialbahnrolle
- YA11.n, YA11.n+1: Stellgrößen für die Stelleinrichtung zum Ausstoßen einer Materialbahnrolle
- XEM: Eingangsgrößen, die die Eigenschaften der Materialbahnrolle beschreiben
- XET: Eingangsgrößen, die die Eigenschaften eines Transportstreckenabschnittes beschreiben
- XET14.n: Eingangsgrößen, die die Eigenschaften eines Transportwegteilabschnittes 14.n beschreiben
- XET9.n2: Eingangsgrößen, die die Eigenschaften des Teilabschnittes 9.n2 im Stoppbereich 4.n beschreiben
- XET9.(n+1): Eingangsgrößen, die die Eigenschaften eines Teilabschnittes 9.(n+1)1 im Stoppbereich 4.n+1 beschreiben
- XE-Esoll: Sollwert für Energieniveau der Materialbahnrolle beim Eintritt in den in Transportrichtung folgenden Stoppbereich
- XE-EA: Eingangsgrößen, den Energieeintrag beim Ausstoßen der Materialbahnrolle betreffend
- R: Transporteinrichtung
- P1, P2, P3: Bewegungsrichtungen

## Patentansprüche

1. Verfahren zum Transport von Materialbahnrollen (2.n, 2.n+1) über eine vordefinierte Transportstrecke (s), umfassend über die Transportstrecke (s) zueinander beabstandet angeordnete und Stoppstellen (3, 3.n. 3.n+1) ausbildende Stoppbereiche (4, 4.n, 4.n+1), an welchen die kinetische Energie der einzelnen Materialbahnrolle(2.n, 2.n+1) reduziert wird und die Materialbahnrolle (2.n, 2.n+1) aus dem Stoppbereich (4, 4.n, 4.n+1) entlassen und in Transportrichtung (R) zur nächsten Stoppstelle (4, 4.n, 4.n+1) weitertransportiert wird,
**dadurch gekennzeichnet,**
**dass** die Materialbahnrolle (2.n, 2.n+1) mittels eines Kraftstoßes (FS) aus dem Stoppbereich (4, 4.n, 4.n+1) heraus und in Transportrichtung (R) zum folgenden Stoppbereich (4, 4.n, .n+1) bewegt wird, wobei der Kraftstoß (FS) derart gesteuert wird, dass die Materialbahnrolle (2.n, 2.n+1) bei Eintreten in den in Transportrichtung (R) folgenden Stoppbereich (4.n, 4.n+1) ein vordefiniertes Energieniveau (XE-Esoll) aufweist.

2. Verfahren nach Anspruch 1,
**dadurch gekennzeichnet,**
**dass** der Kraftstoß (FS) zum Ausstoßen der Materialbahnrolle (2.n, 2.n+1) derart gesteuert wird, dass die Materialbahnrolle (2.n, 2.n+1) bei Erreichen der in Transportrichtung (R) folgenden Stoppstelle (3, 3.n, 3.n+1) ihre Ruhestellung erreicht.

3. Verfahren nach Anspruch 1,
**dadurch gekennzeichnet,**
**dass** der Kraftstoß (FS) zum Ausstoßen der Materialbahnrolle (2.n, 2.n+1) derart gesteuert wird, dass die Materialbahnrolle (2.n, 2.n+1) bei Erreichen des in Transportrichtung (R) nächsten Stoppbereiches (4, 4.n, 4.n+1) ein vordefiniertes Energieniveau (XE-Esoll) aufweist, in dessen Abhängigkeit eine Auffangkraft (FH) in diesem Stoppbereich (4.n, 4.n+1) gesteuert wird, welche die Materialbahnrolle (2.n, 2.n+1) entsprechend einer vordefinierten Funktion in ihre Ruhestellung verbringt.

4. Verfahren nach einem der Ansprüche 1 bis 3,
**dadurch gekennzeichnet,**
**dass** die Steuerung des Kraftstoßes (FS) als Funktion zumindest einer der nachfolgenden Größen erfolgt:
- wenigstens eine, die Eigenschaften der Materialbahnrolle (2.n, 2.n+1) wenigstens mittelbar beschreibende Größe (XEM);
- wenigstens eine, die Eigenschaften des auf die Stoppstelle (3.n, 3.n+1) jeweils folgenden Transportstreckenabschnittes (s_{T}, S_{Tn}, S_{Tn+1}) wenigstens mittelbar beschreibende Größe (XET).

5. Verfahren nach einem der Ansprüche 1 bis 4,
**dadurch gekennzeichnet,**
**dass** die Steuerung der Auffangkraft (FH) als Funktion zumindest einer der nachfolgenden Größen erfolgt:
- wenigstens eine, die Eigenschaften der Materialbahnrolle (2.n, 2.n+1) wenigstens mittelbar beschreibende Größe (XEM);
- wenigstens eine, die Eigenschaften des der Stoppstelle (3.n, 3.n+1) vorgeordneten Transportstreckenabschnittes (s_{T}, s_{Tn}, s_{Tn+1}) wenigstens mittelbar beschreibende Größe (XET);
- des auf die Materialbahnrolle (2.n, 2.n+1) im der Stoppstelle (3.n, 3.n+1) vorgeordneten Stoppbereich (4.n, 4.n+1) aufgebrachten Kraftstoßes (FS).

6. Verfahren nach einem der Ansprüche 4 bis 5,
**dadurch gekennzeichnet,**
**dass** als die Eigenschaften der Materialbahnrolle (2.n, 2.n+1) wenigstens mittelbar beschreibende Größen (XEM) zumindest eine der folgenden Größen erfasst wird:
- Durchmesser der Materialbahnrolle (2.n, 2.n+1);
- Gewicht der Materialbahnrolle (2.n, 2.n+1);
- Wickelhärte der Materialbahnrolle (2.n, 2.n+1),
- Reibbeiwert der Materialbahnrolle (2.n, 2.n+1),
- Erstreckung parallel zur Längsachse der Materialbahnrolle (2.n, 2.n+1).

7. Verfahren nach einem der Ansprüche 4 bis 6;
**dadurch gekennzeichnet,**
**dass** als die Eigenschaften des Transportstreckenabschnittes (s_{T}, s_{Tn}, s_{Tn+1}) wenigstens mittelbar beschreibenden Größen (XET) wenigstens eine der nachfolgend genannten Größen erfasst/bestimmt wird:
- Topographie (TB),
- Oberflächenbeschaffenheit (OB), insbesondere Rauhigkeit und Elastizität.
-

8. Verfahren nach einem der Ansprüche 1 bis 7,
**dadurch gekennzeichnet,**
**dass** das Ausstoßen von einer Einrichtung (21, 21.n, 21.n+1) zum Ausstoßen der Materialbahnrolle (2.n, 2.n+1) und das Auffangen von einer Einrichtung (20, 20.n, 20.n+1) zum Auffangen der Materialbahnrolle (2.n, 2.n+1) erfolgt, welche Einrichtungen am Außenumfang der Materialbahnrolle (2.n, 2.n+1) wirksam werden und entsprechend des über diese zu erzeugenden Kraftstoßes (FS) und/oder der über diese zu erzeugende Auffangkraft (FH) angesteuert werden.

9. Verfahren nach einem der Ansprüche 1 bis 8,
**dadurch gekennzeichnet,**
**dass** die Materialbahnrolle (2.n, 2.n+1) über ihren Transportweg (s) zumindest teilweise entlang einer Steigung bewegt wird und/oder über ihren Transportweg (s) zumindest teilweise entlang einer Ebene bewegt wird und/oder über ihren Transportweg (s) zumindest teilweise entlang eines Gefälles bewegt wird.

10. Verfahren nach einem der Ansprüche 1 bis 9,
**dadurch gekennzeichnet,**
**dass** für Materialbahnrollen (2.n, 2.n+1) gleichen Typs in der Steuerung (12, 12.n, 12.n+1) für einen konkreten Transportstreckenabschnitt (s_{T}, s_{Tn}, s_{Tn+1}) Steuerprogramme zur Einstellung des Kraftstoßes (FS) und/oder der Auffangkraft (FH) hinterlegt sind, das Erreichen des Energieniveaus am folgenden Stoppbereich (4.n, 4.n+1) überwacht wird und bei Abweichung außerhalb eines vordefinierten Zulässigkeitsbereiches die Stellgrößen (YA11, YA11.n, YA11.n+1, YH11, YH11.n, YH11.n+1) für den Kraftstoß (FS) und/oder der Auffangkraft (FH) im Stoppbereich (4, 4.n, 4.n+1) adaptiv angepasst werden.

11. Vorrichtung (1) zum Transport von Materialbahnrollen (2.n, 2.n+1) über eine vordefinierte Transportstrecke (s), umfassend über die Transportstrecke (s) zueinander beabstandet angeordnete Stoppbereiche (4, 4.n, 4.n+1), in denen zumindest über Stelleinrichtungen (11, 11.n, 11.n+1) betätigbare Einrichtungen (20, 20.n, 20.n+1) zum Auffangen der einzelnen Materialbahnrolle (2.n, 2.n+1) angeordnet sind,
**dadurch gekennzeichnet,**
**dass** in den Stoppbereichen (4, 4.n, 4.n+1) über Stelleinrichtungen (11, 11.n, 11.n+1) betätigbare Einrichtungen (21, 21.n, 21.n+1) zum Ausstoßen der Materialbahnrolle (2.n, 2.n+1) vorgesehen sind und dem einzelnen Stoppbereich (4, 4.n, 4.n+1) eine Steuerung/Regelung (12, 12.n, 12.n+1) zur Ansteuerung der Stelleinrichtungen (11, 11.n, 11.n+1) zur Erzeugung eines definierten Kraftstoßes (FS) oder einer definierten Auffangkraft (FH) zugeordnet ist.

12. Vorrichtung (1) nach Anspruch 11,
**dadurch gekennzeichnet,**
**dass** die Einrichtungen (21 , 21.n, 21.n+1) zum Ausstoßen der Materialbahnrolle (2.n, 2.n+1) von den Einrichtungen (20, 20.n, 20.n+1) zum Auffangen der Materialbahnrolle (2.n, 2.n+1) gebildet werden, die über die gleichen Stelleinrichtungen (11, 11.n, 11.n+1) angesteuert werden.

13. Vorrichtung (1) nach Anspruch 11 oder 12,
**dadurch gekennzeichnet,**
**dass** den Einrichtungen (21, 21.n, 21.n+1) zum Ausstoßen der Materialbahnrolle (2.n, 2.n+1) und den Einrichtungen (20, 20.n, 20.n+1) zum Auffangen der Materialbahnrolle (2.n, 2.n+1) einer Mehrzahl von Stoppbereichen (4, 4.n, 4.n+1) eine gemeinsame Steuerung/Regelung (12, 12.n, 12.n+1) zugeordnet ist.

14. Vorrichtung (1) nach einem der Ansprüche 11 bis 13,
**dadurch gekennzeichnet,**
**dass** die Einrichtungen (21, 21.n, 21.n+1) zum Ausstoßen der Materialbahnrolle (2.n, 2.n+1) und die Einrichtungen (20, 20.n, 20,n+1) zum Auffangen der Materialbahnrolle (2.n, 2.n+1) von einem, einen Teilbereich der Transportstrecke (s) bildenden Funktionselement (6, 6.n, 6.n+1) in Form einer Wippe (10m 10.n, 10.n+1) gebildet werden, welche um eine senkrecht zur Transportrichtung (R) und parallel zur Längsachse der Materialbahnrolle (2, 2.n, 2.n+1) ausgerichtete Achse verschwenkbar ist (P1) und oder in horizontaler Richtung (P2) parallel zur Transportrichtung (R) und/oder in vertikaler Richtung (P3) bewegbar ist.

15. Vorrichtung (1) nach einem der Ansprüche 11 bis 14,
**dadurch gekennzeichnet,**
**dass** die Steuerung/Regelung (12, 12.n, 12.n+1) zumindest einen, mit wenigstens einer der nachfolgenden Einrichtungen koppelbaren Eingang aufweist:
- eine Einrichtung (15) zur Erfassung zumindest einer die Eigenschaften der Materialbahnrolle (2.n, 2.n+1) wenigstens mittelbar beschreibenden Größe (XEM)
- eine Einrichtung (16, 17) zur Erfassung zumindest einer die Eigenschaften des Transportstreckenabschnittes (s_{T}, s_{Tn}, s_{Tn+1}) wenigstens mittelbar beschreibenden Größe (XET)
- eine Einrichtung (18) zur Vorgabe des Soll-Energieniveaus der Materialbahnrolle (2, 2.n) im folgenden Stoppbereich (4.n+1)
- eine Einrichtung (19) zur wenigstens indirekten Erfassung der Bewegungsenergie der Materialbahnrolle (2.n, 2.n+1) beim Eintritt in den in Transportrichtung (R) folgenden Stoppbereich (4.n+1).

16. Vorrichtung (1) nach einem der Ansprüche 11 bis 15,
**dadurch gekennzeichnet,**
**dass** die Steuerung/Regelung (12, 12.n, 12.n+1) zumindest einen Stellgrößenbildner zur Bestimmung zumindest einer Stellgröße (YH11, YH11.n, YH11.n+1) zur Ansteuerung der Stelleinrichtung (11, 11.n, 11.n+1) zur Erzeugung einer definierten Auffangkraft (FH) und/oder einer Stellgröße (YA11, YA11.n, YA11.n+1) zur Ansteuerung der Stelleinrichtung (11, 11.n, 11.n+1) zur Erzeugung eines definierten Kraftstoßes (FS) und wenigstens einen Ausgang zur Kopplung mit den genannten Stelleinrichtungen (11, 11.n, 11.n+1) umfasst.
